**Europäisches Patentamt**

**European Patent Office**

**Office européen des brevets**

(19)

(11) Veröffentlichungsnummer : **0 163 977**
**B1**

(12)

# EUROPÄISCHE PATENTSCHRIFT

(45) Veröffentlichungstag der Patentschrift :
02.12.87

(51) Int. Cl.⁴ : **B 65 G 15/58**

(21) Anmeldenummer : **85105678.8**

(22) Anmeldetag : **09.05.85**

(54) **Vorrichtung zum Transport von Werkstücken.**

(30) Priorität : **10.05.84 DE 3417315**

(43) Veröffentlichungstag der Anmeldung :
**11.12.85 Patentblatt 85/50**

(45) Bekanntmachung des Hinweises auf die Patenterteilung : **02.12.87 Patentblatt 87/49**

(84) Benannte Vertragsstaaten :
**AT BE CH DE FR GB IT LI NL SE**

(56) Entgegenhaltungen :
**US-A- 907 790**
**US-A- 2 554 935**

(73) Patentinhaber : **Schöning, Rolf**
**Fichtenweg 7**
**D-4543 Lienen (DE)**

**Marold, Josef A.**
**Beekebreite 18-20**
**D-4504 Georgsmarienhütte (DE)**

(72) Erfinder : **Schöning, Rolf**
**Fichtenweg 7**
**D-4543 Lienen (DE)**

(74) Vertreter : **Busse & Busse Patentanwälte**
**Postfach 1226 Grosshandelsring 6**
**D-4500 Osnabrück (DE)**

Jouve, 18, rue St-Denis, 75001 Paris, France

EP 0 163 977 B1

## Beschreibung

Die Erfindung betrifft eine Vorrichtung zum Transport von Werkstücken nach dem Oberbegriff des Patentanspruchs 1.

Bei bekannten Vorrichtungen dieser Art, die zum Halten, Fördern und Positionieren von Werkstücken im Zuge ihrer Bearbeitung oder Behandlung eingesetzt werden, sind die Klemmelemente jeweils der Form des zu transportierenden Werkstücks angepaßt, indem sie beispielsweise nach Art einer Lagerschale aufgebogene Aufnahmeklemmen zum Halten stabförmiger Gegenstände kreisförmigen Querschnitts bilden. Solche, in ihrer Form unkomplizierte Werkstücke können demnach mit verhältnismäßig geringem baulichem Aufwand hinsichtlich der Klemmelemente vom Magazinband transportiert werden.

In den Fällen jedoch, in denen die zu transportierenden Werkstücke eine komplizierte Form bzw. Kontur aufweisen, die ein Stapeln oder sonstiges Magazinieren der Werkstücke nicht ohne weiteres zuläßt, weil sich die Werkstücke ineinander verkeilen können bzw. keine geordnete Lage einnehmen, müssen Sondervorrichtungen eingesetzt werden, die naturgemäß mit einem hohen Herstellungsaufwand behaftet und daher insbesondere bei kleinen Werkstücklosen unwirtschaftlich sind. Aus diesen Gründen behilft man sich unter solchen Umständen mit einem Transport der Werkstücke bzw. deren Zuführung zu den einzelnen Bearbeitungsstationen von Hand.

Der Erfindung liegt die Aufgabe zugrunde, eine Vorrichtung zum Transport von Werkstücken der eingangs angegebenen Art zu schaffen, bei der die Klemmelemente des Magazinbandes eine von einer speziellen Werkstückform unabhängige Gestaltung aufweisen, so daß eine Vielzahl von Werkstücken unterschiedlichster Formen vom Magazinband transportiert werden kann.

Diese Aufgabe wird nach der Erfindung durch eine Ausgestaltung der Vorrichtung gemäß dem Patentanspruch 1 gelöst. Bei dieser, auf einfache Weise getroffenen Ausgestaltung bieten die Klemmfingerpaare des Magazinbandes mit ihren Klemmfingern mehrfache Aufnahme- und Haltemittel für eine Vielzahl in ihrer Kontur und in ihren Abmessungen unterschiedlicher Werkstücke dar, die von den Klemmfingern jedes Klemmfingerpaares, dem anfänglich V-förmigen Zwischenraum zwischen diesen und der Grenzfläche zwischen den gegeneinandergedrückten Klemmfingern der jeweils benachbarten Klemmfingerpaare gebildet sind und, einzeln oder in Kombination, eine Vielzahl von Werkstücken unterschiedlichster Kontur und Abmessungen aufzunehmen und durch Klemmkraft auf dem Magazinband lagerichtig zu halten vermögen. Dabei kommen als Werkstücke, die mit der erfindungsgemäßen Vorrichtung transportiert werden können, nicht nur Metallteile, sondern auch solche aus Kunststoff, Glas, Holz od. dgl. in Betracht. Außerdem können Werkstücke im bereits montierten oder vormontierten Zustand oder mehrere verschiedene Werkstücke gleichzeitig, hintereinander oder nebeneinander, sofern in weiterer Ausgestaltung der Erfindung zwei oder mehrere Magazinbänder für einen Umlauf in parallelen Ebenen nebeneinander in der Vorrichtung abgestützt sind, eingelegt und über geeignete Positionier- und Zuführmodule den Bearbeitungs- und Montageeinrichtungen zugeführt werden.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigen:

Fig. 1 eine perspektivische Darstellung einer Vorrichtung zum Transport von Werkstücken,

Fig. 2 eine Seitenansicht eines einzelnen Klemmfingerpaares vor seiner Befestigung auf dem Magazinband,

Fig. 3 eine Seitenansicht mehrerer Klemmfingerpaare im auf dem Magazinband befestigten Zustand und

Fig. 4 bis 9 je ein Anwendungsbeispiel der Vorrichtung.

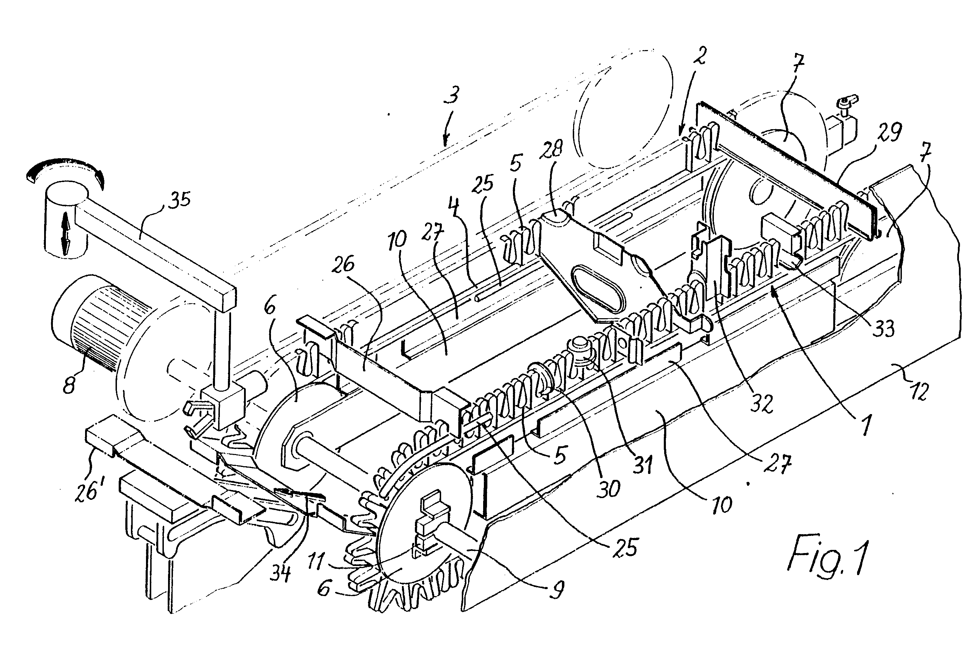

Wie sich zunächst aus Fig. 1 ergibt, umfaßt die Vorrichtung zum Transport von Werkstücken bei dem dargestellten Beispiel zwei Magazinbänder 1 und 2, während bei 3 ein weiteres Magazinband strichpunktiert angegeben ist, um anzudeuten, daß je nach der quer zur Förderrichtung bemessenen Länge der Werkstücke zwei oder mehrere Magazinbänder 1, 2 und 3 für einen Umlauf in parallelen Ebenen nebeneinander in der Vorrichtung abgestützt sein können. Im einfachsten Falle, d. h. für den Transport von Werkstücken, deren Querabmessungen die Magazinbandbreite nicht wesentlich überschreiten, genügt ein einziges Magazinband.

Jedes Magazinband 1, 2 und 3 umfaßt ein Tragband 4, auf dessen Oberseite durchlaufend Klemmfingerpaare 5 eng aneinandergrenzend befestigt sind. Die Tragbänder 4 laufen jeweils um zwei Umlenkrollen 6 und 7 um, von denen die Umlenkrollen 6 über eine mit einem Motor 8 verbundene Antriebswelle 9 angetrieben sind. Die Magazinbandhalterung bildet mit längsverlaufenden Trägern 10 unter Einbeziehung der Umlenkräder 6 und 7 eine Einheit, die über einen Klemm-Mechanismus 11 lösbar auf der Antriebswelle 9 festgelegt ist. Bei 12 ist ein äußeres Verkleidungsblech wiedergegeben, das teilweise abgebrochen dargestellt ist.

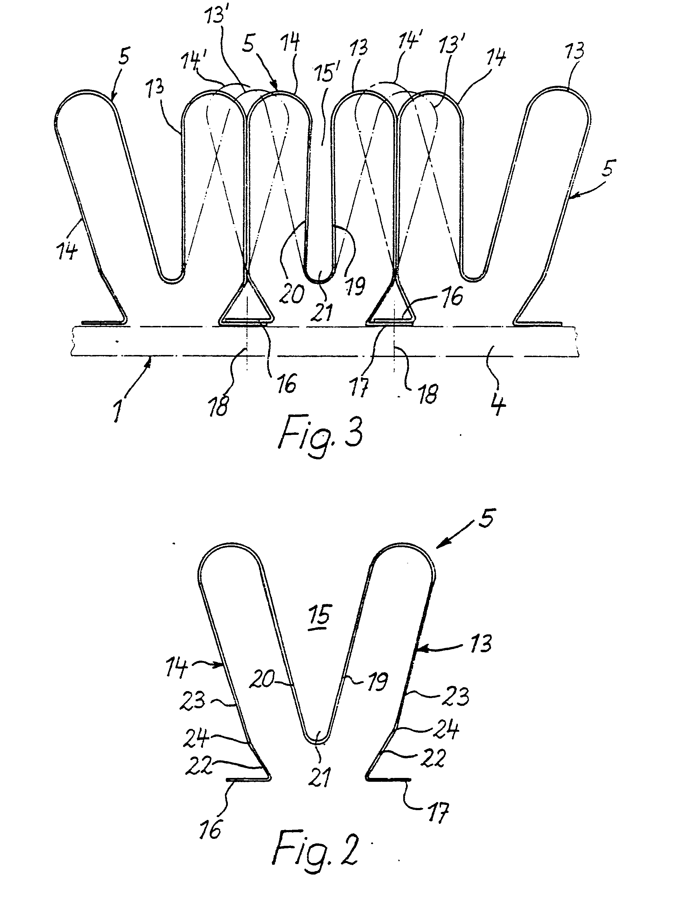

Die Klemmfingerpaare 5 umfassen, wie insbesondere aus den Fig. 2 und 3 ersichtlich ist, zwei Klemmfinger 13 und 14, die anfänglich, d. h. im noch nicht auf dem Tragband 4 befestigten Zustand, einen V-förmigen Zwischenraum 15 zwischen sich begrenzen. Die Klemmfingerpaare 5 sind dabei jeweils von einstückig geformten Flachbändern, insbesondere aus Federstahl, mit einer Breite von ca. 15 mm gebildet und weisen eine vordere Befestigungslasche 16 und eine hintere Befestigungslasche 17 auf, die in der Ebene der Oberseite des Magazinbandes bzw. des Tragbandes 4 verlaufen. Nach Bedarf kann eine Oberflächenbeschichtung oder sonstige -behandlung des die Klemmfingerpaare 5 bildenden Flachbandes vorgenommen sein, oder das Flachband kann insgesamt aus einem geeigneten Kunststoff bestehen.

Zur Bildung eines Magazinbandes werden die Klemmfingerpaare 5 gemäß Fig. 2 in der Weise mit dem Tragband 4 vereinigt, daß die Befestigungslaschen 16, 17 benachbarter Klemmfingerpaare 5 gemeinsam unter gegenseitiger Überlappung auf der Oberseite des Bandes 4 z. B. durch Nietung befestigt sind, wie dies in Fig. 3 bei 18 strichpunktiert veranschaulicht ist. Die Klemmfingerpaare 5 sind dabei in der Weise eng aneinandergrenzend auf dem Tragband oder -riemen 4 befestigt, daß die Klemmfinger 13 und 14 benachbarter Klemmfingerpaare 5 in gegenseitiger Abstützungsanlage gehalten sind. Diese Abstützungsanlage der Klemmfinger 13 und 14 führt zu deren Verformung aus ihrer Ursprungslage, die in Fig. 3 bei 13' und 14' strichpunktiert veranschaulicht ist, in eine im wesentlichen senkrechte Stellung unter entsprechender federnder Vorspannung der insoweit zusammenwirkenden Klemmfinger 13 und 14 der benachbarten Klemmfingerpaare 5. Mit dieser Verformung einer geht eine entsprechende Verengung des Zwischenraums 15 zwischen den Klemmfingern 13 und 14 des jeweiligen Klemmfingerpaares 5, so daß dieser die Form eines im wesentlichen gleich breiten senkrechten Spaltes 15' mit einer geringen Verengung zu seinem oberen Ende hin annimmt, der von den Innenseiten 19 und 20 der federnd gegeneinander bewegten Klemmfinger 13 und 14 begrenzt ist.

Die freien, oberen Enden der Klemmfinger 13 und 14 sind konvex gewölbt, und der Grund des Zwischenraums 15 bzw. 15' zwischen den Klemmfingern 13 und 14 jedes Klemmfingerpaares 5 bildet eine konkav gewölbte Hohlkehle 21. Auf diese Weise ist die Kontur der Klemmfinger 13 und 14 von fließenden Linien gebildet, was eine bereitwillige Verformung der Klemmfinger 13 und 14 begünstigt, wobei die insoweit glatten Flächen auch kein unerwünschtes Gesperre bilden.

Die Befestigungslaschen 16 und 17 sind hingegen spitzwinklig ohne einen nennenswerten Radius von den Klemmfingern 13, 14 abgebogen und schließen sich über einen eingezogenen Verbindungsteil 22 an die Außenseite 23 des jeweiligen Klemmfingers 13 bzw. 14 an. Der Übergang des Verbindungsteils 22 in die Außenseite 23 des jeweiligen Klemmfingers 13, 14 ist dabei von einer Biegelinie 24 mit nach außen weisender Wölbung gebildet, die etwa in der Ebene der Hohlkehle 21 verläuft. Auf diese Weise ist bei der aneinandergrenzenden Befestigung der Klemmfingerpaare 5 auf dem Tragriemen 4 einerseits eine definierte Verformung der Klemmfinger 13 und 14 und andererseits eine sichere unterseitige Abstützung der Klemmfinger 13, 14 im Bereich der Befestigungslaschen 16, 17 und Verbindungsteile 22 erreicht.

Aus Fig. 1 sind ferner Gleitschienen 25 ersichtlich, die sich zu beiden Seiten der Klemmfingerpaare 5 über die gesamte Länge des Fördertrums der Magazinbänder 1, 2 erstrecken und senkrecht zu der üblicherweise horizontalen Förderrichtung des Magazinbandes 1 bzw. 2 verstellbar mit den Trägern 10 verbunden sind. Auf diese Weise läßt sich die Einstecktiefe der zu fördernden Werkstücke genau festlegen, wie dies in Fig. 1 beispielsweise für ein Werkstück 26 veranschaulicht ist, das mit seinen beiden Endbereichen geringfügig über die beiden Magazinbänder 1 und 2 nach außen vorsteht und mit seiner Unterseite auf den Gleitschienen 25 abgestützt ist.

Ferner sind zu beiden Seiten eines jeden Klemmbandes 1, 2 Führungsschienen 27 an den Trägern 10 angebracht. Die Führungsschienen 27 sind quer zur Umlaufrichtung des Magazinbandes 1 bzw. 2 in zueinander senkrechten Richtungen verstellbar an den Trägern 10 angebracht. Bei der angenommenen waagerechten Förderrichtung der Magazinbänder 1, 2 können sie also in der Höhe und parallel zur Antriebswelle 9 verstellt werden, um im Bedarfsfall jeweils eine randseitige Führung für die zu transportierenden Werkstücke zu bilden. Durch die Verstellmöglichkeiten können die Führungsschienen 27 jeweils an unterschiedlich geformte Teile bzw. nach außen über die Magazinbänder 1, 2 überstehende Endbereiche solcher Teile angepaßt werden. Dies ist in Fig. 1 beispielsweise für ein Formteil 28 dargestellt, das mehrfache Abwinklungen umfaßt.

Darüber hinaus ist es möglich, durch Lösen des Klemm-Mechanismus 11 den Querabstand zwischen den benachbarten Magazinbändern 1, 2 zu verändern, insbesondere zu vergrößern, um eine Anpassung an lange Werstücke, beispielsweise das in Fig. 1 dargestellte Werkstück 29, vornehmen zu können.

Neben den Werkstücken 26, 28 und 29 sind in Fig. 1 einige kleinere Werkstücke 30, 31, 32 und 33 jeweils unterschiedlichster Form als Beispiele veranschaulicht, die wegen ihrer geringen Abmessungen quer zur Förderrichtung nur vom Magazinband 1 transportiert werden.

Die Vorrichtung ist mit ihrem Magazinbändern als Einlegehilfe, Materialpuffer oder als Zuführ- und Abführeinrichtung vielseitig verwendungsfähig. Im Betrieb kann sie an die Maschine, in der die Werkstücke bearbeitet oder behandelt werden, in der Weise angekoppelt werden, daß die Magazinbänder 1, 2 die in den Klemmfingerpaaren 5 gehaltenen Teile im Takt der zu beschickenden Maschine in eine Entnahmeposition 34 fördern, die bei einer horizontalen Förderrichtung der Magazinbänder 1, 2 beispielsweise in einem Winkel von 35° zur Horizontalen stehen kann. Grundsätzlich kann die Förderrichtung der Magazinbänder 1, 2 jedoch auch jede geeignete, von der Horizontalen abweichende, insbesondere mehr oder weniger geneigte Richtung sein. Mittels einer auf- und abbewegbaren sowie verschwenkbaren Entnahme- und Positioniervorrichtung 35 wird das in Entnahmeposition 34 befindliche Werkstück abgenommen und in eine für die Eingabe in die Bearbeitungs- oder Behandlungsmaschine geeignete Position gebracht, die in Fig. 1 bei 26' für das Werkstück 26 veranschaulicht ist.

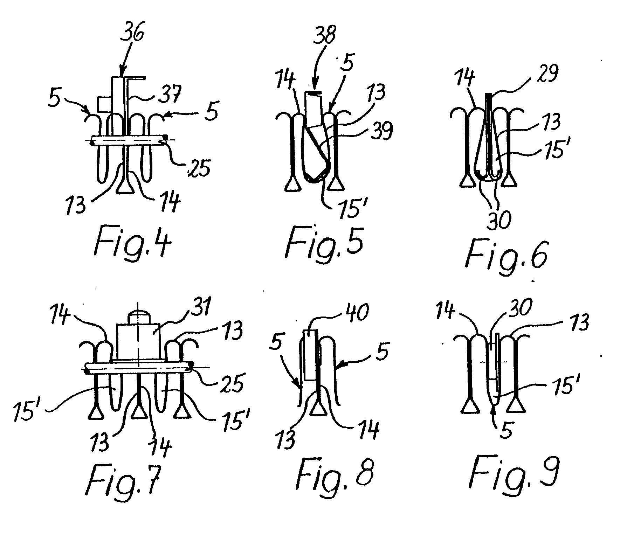

Die Anwendungsbeispiele nach den Fig. 4 bis 9 zeigen in Fig. 4 ein Formteil 36 mit mehrfachen Abwinklungen, das mit einem dünnen senkrechten Teil 37 zwischen die mit Vorspannung aneinanderliegenden Finger 13 und 14 zweier auf dem Magazinband unmittelbar aufeinanderfolgender Klemmfingerpaare 5 eingedrückt und durch Klemmeingriff mit diesen festgelegt ist.

Im Falle der Fig. 5 ist ein Werkstück 38, das einen Widerhaken 39 umfaßt, in den Zwischenraum 15' zwischen den beiden Klemmfingern 13, 14 eines Klemmfingerpaares 5 eingedrückt und durch Klemmeingriff mit diesen festgelegt.

Ein ähnliches Anwendungsbeispiel veranschaulicht Fig. 6 anhand des Werkstücks 29, das an seinem unteren Ende zwei Haken 30 umfaßt. Das Werkstück 29 ist wiederum im Zwischenraum 15' der beiden Klemmfinger 13 und 14 eines Klemmfingerpaares 5 gehalten, wobei der Klemmeingriff jeweils im unteren und oberen Endbereich des Zwischenraums 15' vorgenommen ist.

Die Fig. 7 zeigt das Werkstück 31, bei dem es sich um einen Hohlkörper mit einem unteren Randflansch handelt. Das Werkstück 31 ist auf die mit Vorspannung aneinanderliegenden Klemmfinger 13 und 14 zweier benachbarter Klemmfingerpaare 5 aufgestülpt und auf diese Weise durch Klemmeingriff mit diesen verbunden, wobei der untere Randflansch zusätzlich in den jeweiligen Zwischenraum 15' eingreift und an den jeweiligen Klemmfinger 13 bzw. 14 angeklemmt ist.

Die Fig. 8 veranschaulicht einen Winkel 40, der mit einem Schenkel zwischen die aneinanderliegenden Finger 13 und 14 zweier benachbarter Klemmfingerpaare 5 gedrückt ist.

Bei dem Anwendungsbeispiel nach Fig. 9 schließlich ist das Werkstück 30, bei dem es sich um eine Flanschscheibe handelt, wie im Falle der Fig. 5 und 6 in den Zwischenraum 15' zwischen den Klemmfingern 13 und 14 eines Klemmfingerpaares 5 eingesteckt.

Im Betrieb des Magazinbandes öffnet sich der Zwischenraum 15' eines jeden Klemmfingerpaares 5 in den Umlenkbereichen des Tragbandes 4 selbsttätig um ein gewisses Maß, die gegenseitige federnde Vorspannung der Klemmfinger 13 und 14 benachbarter Klemmfingerpaare 5 bleibt jedoch unter allen Betriebsbedingungen erhalten, gleichgültig, ob sie im für den Werkstücktransport unbenutzten Zustand in gegenseitiger Abstützungsanlage gehalten sind oder sie zwischen sich ein zu förderndes Werkstückteil aufnehmen.

## Patentansprüche

1. Vorrichtung zum Transport von Werkstücken, mit einem um Umlenkrollen geführten Magazinband (1, 2, 3), das zum Halten der Werkstücke mit federnd nachgiebigen Klemmelementen (5) versehen ist, dadurch gekennzeichnet, daß die Klemmelemente von paarweise zusammengefaßten anfänglich einen V-förmigen Zwischenraum (15) zwischen sich begrenzenden Klemmfingern (13, 14) gebildet sind und die Klemmfingerpaare (5) jeweils eng aneinandergrenzend auf einem Trägerband (4) befestigt sind, derart, daß die Klemmfinger (13, 14) benachbarter Klemmfingerpaare (5) in den V-förmigen Zwischenraum (15) des jeweiligen Klemmfingerpaares verengender, gegenseitiger Abstützungsanlage gehalten sind.

2. Vorrichtung nach Anspruch 1, dadurch gekennzeichnet, daß die Klemmfingerpaare (5) jeweils von einstückig geformten Flachbändern mit in der Ebene der Oberseite des Trägerbandes (4) verlaufenden vorderen und hinteren Befestigungslaschen (16, 17) gebildet sind.

3. Vorrichtung nach Anspruch 2, dadurch gekennzeichnet, daß die Befestigungslaschen (16, 17) benachbarter Klemmfingerpaare (5) gemeinsam unter gegenseitiger Überlappung am Trägerband (4) befestigt sind.

4. Vorrichtung nach einem der Ansprüche 1 bis 3, dadurch gekennzeichnet, daß die freien Enden der Klemmfinger (13, 14) konvex gewölbt sind und der Grund des Zwischenraums (15, 15') zwischen den Klemmfingern (13, 14) jedes Klemmfingerpaares (5) eine konkav gewölbte Hohlkehle (21) bildet.

5. Vorrichtung nach einem der Ansprüche 1 bis 4, dadurch gekennzeichnet, daß die Befestigungslaschen (16, 17) spitzwinklig von den Klemmfingern (13, 14) abgebogen sind und über einen eingezogenen Verbindungsteil (22) an die Außenseite (23) des jeweiligen Klemmfingers anschließen.

6. Vorrichtung nach den Ansprüchen 4 und 5, dadurch gekennzeichnet, daß der Verbindungsteil (22) über eine etwa in der Ebene der Hohlkehle (21) zwischen den Klemmfingern (13, 14) verlaufende Biegelinie (24) in die Außenseite (23) des jeweiligen Klemmfingers übergeht.

7. Vorrichtung nach einem der Ansprüche 1 bis 6, dadurch gekennzeichnet, daß die Klemmfingerpaare (5) aus Federstahl bestehen.

8. Vorrichtung nach einem der Ansprüche 1 bis 7, dadurch gekennzeichnet, daß zwei oder mehrere Magazinbänder (1, 2, 3) für einen Umlauf in parallelen Ebenen nebeneinander in der Vorrichtung abgestützt sind.

9. Vorrichtung nach einem der Ansprüche 1 bis 8, dadurch gekennzeichnet, daß zu beiden Seiten der Klemmfingerpaare (5) des oder jedes Magazinbandes (1, 2, 3) parallel zu diesen Gleitschienen (25) angeordnet sind, die senkrecht zur Bewegungsrichtung des Magazinbandes (1, 2, 3) verstellbar im Vorrichtungsgestell abgestützt sind.

10. Vorrichtung nach einem der Ansprüche 1 bis 9, dadurch gekennzeichnet, daß zu beiden Seiten des oder jedes Magazinbandes (1, 2, 3) parallel zu diesem Führungsschienen (27) angeordnet sind, die quer zur Umlaufrichtung des Magazinbandes in zueinander senkrechten Richtungen verstellbar im Vorrichtungsgestell abgestützt sind.

## Claims

1. An apparatus for conveying workpieces, having a magazine belt (1, 2, 3) which is guided round pulleys and is provided with resiliently flexible gripping elements (5) to hold the workpieces, characterised in that the gripping elements are formed by gripping fingers (13, 14) combined in pairs and initially defining a V-shaped gap (15) between them and the pairs of gripping fingers (5) are each secured, closely adjacent to one another, to a carrier belt (4) in such a manner that the gripping fingers (13, 14) of adjacent pairs (5) of gripping fingers are held in a mutual supporting arrangement narrowing the V-shaped gap (15) in the pair of gripping fingers in question.

2. An apparatus as claimed in claim 1, characterised in that the pairs (5) of gripping fingers are each formed from flat strips shaped in one piece with front and rear mounting straps (16, 17) extending in the plane of the top of the carrier belt (4).

3. An apparatus as claimed in claim 2, characterised in that the mounting straps (16, 17) of adjacent pairs (5) of gripping fingers are secured jointly to the carrier belt (4) with mutual overlapping.

4. An apparatus as claimed in any one of the claims 1 to 3, characterised in that the free ends of the gripping fingers (13, 14) are curved convexly and the bottom of the gap (15, 15') between the gripping fingers (13, 14) of each pair (5) of gripping fingers forms a channel (21) curved concavely.

5. An apparatus as claimed in any one of claims 1 to 4, characterised in that the mounting straps (16, 17) are bent down from the gripping fingers (13, 14) at an acute angle and are connected to the outside (23) of the gripping finger in question via a reduced connecting portion (22).

6. An apparatus as claimed in claims 4, and 5, characterised in that the connecting portion (22) changes into the outside (23) of the gripping finger in question via a bending line (24) extending substantially in the plane of the channel (21) between the gripping fingers (13, 14).

7. An apparatus as claimed in any one of claims 1 to 6, characterised in that the pairs (5) of gripping fingers consist of spring steel.

8. An apparatus as claimed in any one of claims 1 to 7, characterised in that two or more magazine belts (1, 2, 3) are supported side by side in the apparatus for rotation in parallel planes.

9. An apparatus as claimed in any one of claims 1 to 8, characterised in that disposed at both sides of the pairs (5) of gripping fingers of the or of each magazine belt (1, 2, 3) parallel to these, are slide rails (25) which are supported in the frame of the apparatus for adjustment perpendicular to the direction of movement of the magazine belt (1, 2, 3).

10. An apparatus as claimed in any one of claims 1 to 9, characterised in that disposed at both sides of the or of each magazine belt (1, 2, 3), parallel to this, are guide rails (27) which are supported in the frame of the apparatus for adjustment in directions perpendicular to one another, transversely to the direction of rotation of the magazine belt.

## Revendications

1. Appareil pour le transport de pièces, comportant une bande-magasin (1, 2, 3) passant autour de poulies de renvoi, qui, pour retenir les pièces, est pourvue d'éléments de pinçage (5) élastiquement flexibles, caractérisé en ce que les éléments de pinçage sont formés par des doigts de pinçage (13, 14) groupés par paires et délimitant entre eux initialement un espace en V, (15), et les paires de doigts de pinçage (5) sont fixées l'une tout contre l'autre sur une bande de support (4), d'une manière telle que les doigts de pinçage (13, 14) de paires de doigts (5) voisines soient maintenus dans une position d'appui réciproque provoquant le resserrement de l'espace en V, (15) de chaque paire de doigts de pinçage.

2. Appareil suivant la revendication 1, caractérisé en ce que les paires de doigts de pinçage (5) sont chacune formées de bandes de feuillard d'une pièce présentant des pattes de fixation antérieure et postérieure (16, 17) qui s'étendent dans le plan de la face supérieure de la bande de support (4).

3. Appareil suivant la revendication 2, caractérisé en ce que les pattes de fixation (16, 17) de paires de doigts de pinçage (5) voisines sont fixées ensemble, dans une position de chevauchement réciproque, sur la bande de support (4).

4. Appareil suivant l'une quelconque des revendications 1 à 3, caractérisé en ce que les extrémités libres des doigts de pinçage (13, 14) sont bombées de manière convexe et le fond de l'espace (15, 15') entre les doigts (13, 14) de chaque paire de doigts de pinçage (5) forme une gorge concave (21).

5. Appareil suivant l'une quelconque des revendications 1 à 4, caractérisé en ce que les pattes de fixation (16, 17) sont coudées à angle aigu à partir des doigts de pinçage (13, 14) et se raccordent, par l'intermédiaire d'une partie de liaison rentrante (22), au côté extérieur (23) du doigt de pinçage correspondant.

6. Appareil suivant les revendications 4 et 5, caractérisé en ce que la partie de liaison (22) se raccorde au côté extérieur (23) du doigt de pinçage correspondant par l'intermédiaire d'une ligne de pliage (24) s'étendant environ au niveau de la gorge (21) entre les doigts de pinçage (13, 14).

7. Appareil suivant l'une quelconque des revendications 1 à 6, caractérisé en ce que les paires de doigts de pinçage (5) sont en acier de ressort.

8. Appareil suivant l'une quelconque des revendications 1 à 7, caractérisé en ce que deux ou plus de deux bandes-magasins (1, 2, 3) sont montées l'une à côté de l'autre dans l'appareil de manière à défiler dans des plans parallèles.

9. Appareil suivant l'une quelconque des revendications 1 à 8, caractérisé en ce que des deux côtés des paires de doigts de pinçage (5) de la bande-magasin ou de chacune d'elles (1, 2, 3), parallèlement à celles-ci, sont disposées des barres formant glissières (25) qui sont montées dans le bâti de l'appareil, de manière à pouvoir être ajustées perpendiculairement à la direction de défilement de la bande-magasin (1, 2, 3).

10. Appareil suivant l'une quelconque des revendications 1 à 9, caractérisé en ce que, des deux côtés de la bande-magasin (1, 2, 3) ou de chacune d'elles, parallèlement à celle-ci, sont disposées des barres de guidage (27) qui sont montées dans le bâti de l'appareil de manière à pouvoir être ajustées, transversalement à la direction de défilement de la bande-magasin, dans des directions perpendiculaires l'une à l'autre.

Fig.1

Fig. 3

Fig. 2

Fig.4

Fig.5

Fig.6

Fig.7

Fig.8

Fig.9

0 163 977